# EUROPÄISCHE PATENTSCHRIFT

(11) **EP 2 648 028 B1**
(45) Veröffentlichungstag und Bekanntmachung des Hinweises auf die Patenterteilung: **30.09.2015**
(21) Anmeldenummer: 13161243.4
(22) Anmeldetag: 27.03.2013
(51) Int. Cl.: G02B 21/00, G02B 21/02, G02B 21/22

(54) **Varioskopoptik und Mikroskop mit einer Varioskopoptik**
Varioscope lens and microscope with the same
Optique de varioscope et microscope doté d'un optique de varioscope

(30) Priorität: 03.04.2012 DE 102012102902
(43) Veröffentlichungstag der Anmeldung: 09.10.2013
(73) Patentinhaber: Carl Zeiss Meditec AG, 07745 Jena (DE)
(72) Erfinder: Högele, Artur, 73447 Oberkochen (DE); Liegel, Jürgen, 73447 Oberkochen (DE); Nauli, Fenny, 73447 Oberkochen (DE)
(74) Vertreter: Theobald, Andreas

(56) Entgegenhaltungen:
- AT-B- 238 961
- DE-A1- 19 523 712
- US-A1- 2004 057 108
- US-A1- 2005 174 655
- US-A1- 2009 296 206

## Beschreibung

Die vorliegende Erfindung betrifft ein Mikroskop mit einer Varioskopoptik.

Eine Forderung für viele Anwendungen der Mikroskopie ist, dass das mit einem Mikroskop beobachtete Beobachtungsobjekt im Fokus des Mikroskops bleibt, wenn sich der Arbeitsabstand des Mikroskops vom Beobachtungsobjekt, auch Schnittweite genannte, ändert. Um dies zu erreichen, muss die Brennweite der Objektivoptik veränderbar sein, um sie an die Änderung des Arbeitsabstandes anpassen zu können. In sogenannten Varioskopen wird dies mit einer optischen Anordnung erreicht, die eine Linse oder Linsengruppe mit positiver Brechkraft und eine objektseitig dazu angeordnete Linse oder Linsengruppe mit negativer Brechkraft aufweist, wobei eine der Linsen oder Linsengruppen entlang der optischen Achse verschiebbar angeordnet ist. Ein Stereomikroskop mit einer entsprechenden optischen Anordnung, in der die Linse mit negativer Brechkraft entlang der optischen Achse verschiebbar angeordnet ist, ist beispielsweise in JP 11271625 A beschrieben. Das Einkoppeln von Beleuchtungslicht erfolgt bei der in JP 11271625A beschriebenen Anordnung unterhalb des Negativglieds über einen Umlenkspiegel.

Die US 2009/0296206 A1 beschreibt ein optisches System zum Erzeugen einer stereoskopischen Abbildung, das ein Objektiv mit einer als Negativlinse ausgebildeten Frontgruppe und einer als Positivglied ausgebildeten und beweglich angeordneten rückwärtigen Gruppe aufweist. Die einander gegenüberliegenden Linsenflächen der Frontgruppe und der rückwärtigen Gruppe weisen Krümmungsradien von 309 mm bzw.173 mm auf. Die dem Objekt zugewandte Linsenfläche der Frontgruppe wiest einen Krümmungsradius von -47,7 mm auf.

Soll die Beleuchtungsstrahlung bei einer Varioskopoptik oberhalb des positiven Gliedes in den Mikroskopstrahlengang eingekoppelt werden, sind die Linsen bzw. Linsengruppen der Varioskopoptik für den Beleuchtungsstrahlengang ausgeschnitten, um Rückreflexe der Beleuchtung in die Beobachterpupillen des Mikroskops zu vermeiden. Ausgeschnittene Linsen und Linsengruppen sind jedoch vergleichsweise teuer und erlauben in der Regel nur eine Beleuchtung unter einem relativ großen Beleuchtungswinkel. Objektive, mit denen sich der Arbeitsabstand eines Mikroskops verändern lässt und bei denen die Objektivlinsen für den Beleuchtungsstrahlengang ausgeschnitten sind, sind in US 2004/0057108 A1 und in DE 195 23 712 A1 beschrieben.

Es ist daher Aufgabe der vorliegenden Erfindung, ein vorteilhaftes Mikroskop zur Verfügung zu stellen.

Diese Aufgabe wird durch ein Mikroskop nach Anspruch 1 gelöst. Die abhängigen Ansprüche enthalten vorteilhafte Ausgestaltungen der Erfindung.

Gemäß der Erfindung wird ein Mikroskop mit einer Varioskopoptik und einem durch das Positivglied sowie durch das Negativglied der Varioskopoptik hinzudurchführenden Beleuchtungsstrahlengang zur Verfügung gestellt. Das Mikroskop kann ein Stereomikroskop, insbesondere ein Operationsmikroskop sein. Die Varioskopoptik umfasst ein aus einer Linse oder Linsengruppe gebildetes und eine positive Brechkraft aufweisendes Positivglied sowie ein aus einer Linse oder Linsengruppe gebildetes und eine negative Brechkraft aufweisendes Negativglied. Das Positivglied und das Negativglied sind derart entlang einer optischen Achse angeordnet, dass das Negativglied dem Positivglied in einer Beobachtungsrichtung gesehen nachfolgend angeordnet ist. Mit anderen Worten, das Positivglied ist bildseitig angeordnet, während das Negativglied objektseitig angeordnet ist. Wenigstens das Positivglied oder wenigstens das Negativglied ist entlang der optischen Achse verschiebbar angeordnet, wobei sich durch Verschieben des Positivgliedes bzw. des Negativgliedes die Schnittweite variieren lässt. Im Interesse einer kompakten Ausgestaltung der Varioskopoptik ist es vorteilhaft, wenn der Verschiebeweg des Positivglieds oder des Negativglieds maximal 15 mm, insbesondere max. 12 mm beträgt. Typischerweise ist entweder nur das Positivglied oder nur das Negativglied verschiebbar, wobei aber grundsätzlich auch die Möglichkeit besteht, sowohl das Positivglied als auch das Negativglied verschiebbar auszugestalten.

Das Positivglied weist eine erste Abschlusslinsenfläche auf, die das Positivglied entgegen der Beobachtungsrichtung abschließt, sowie eine zweite Abschlusslinsenfläche, die das Positivglied in Beobachtungsrichtung abschließt. Ebenso weist das Negativglied eine erste Abschlusslinsenfläche auf, die das Negativglied entgegen der Beobachtungsrichtung abschließt, und eine zweite Abschlusslinsenfläche, die das Negativglied in Beobachtungsrichtung abschließt. Die zweite Abschlusslinsenfläche des Positivglieds und die erste Abschlusslinsenfläche des Negativglieds sind in Beobachtungsrichtung gesehen konkav ausgebildet, während die zweite Abschlusslinsenfläche des Negativglieds in Beobachtungsrichtung gesehen, konvex ausgebildet ist.

In der Varioskopoptik weisen die zweite Abschlusslinsenfläche des Positivglieds und die erste Abschlusslinsenfläche des Negativglieds jeweils einen Krümmungsradius mit einem Betrag von höchstens 500 mm auf. Die zweite Abschlusslinsenfläche des Negativglieds weist einen Krümmungsradius mit einem Betrag von höchstens 70 mm auf.

Eine derartige Varioskopoptik ermöglicht es, in einem damit ausgestatteten Mikroskop die Beleuchtung durch die Varioskopoptik hindurchzuführen, ohne dass hierfür ein Ausschneiden der Linsen bzw. Linsengruppen in der Varioskopoptik nötig ist. Mit Hilfe der angegebenen Krümmungsradien gelingt es, Rückreflexe der Beleuchtung an Linsenflächen der Varioskopoptik an den Beobachterpupillen des Mikroskops vorbeizuleiten. Da ein Ausschneiden der Linsen der Varioskopoptik nicht zu erfolgen braucht, kann zudem der Beleuchtungsstrahlengang näher an die optische Achse herangeführt werden, was eine Beleuchtung unter kleineren Beleuchtungswinkel ermöglicht. Kleine Beleuchtungswinkel sind insbesondere bei Operationsmikroskopen vorteilhaft, wenn diese bei Operationen zum Einsatz kommen sollen, die tiefe Operationskanäle mit sich bringen. Aber auch bei anderen Mikroskopen, die zum Beobachten tiefer Kanäle in einem Beobachtungsobjekt zum Einsatz kommen sollen, ist eine Beleuchtung unter möglichst kleinem Beleuchtungswinkel vorteilhaft.

Um eine Korrektur von Farbfehlern zu ermöglichen, ist das Negativglied eine aus einer ersten Teillinse und einen zweiten Teillinse zusammengesetzte Linse. Die erste Teillinse und die zweite Teillinse sind derart entlang der optischen Achse angeordnet, dass die zweite Teillinse der ersten Teillinse in Beobachtungsrichtung gesehen folgt. Die erste Abschlusslinsenfläche des Negativglieds ist in der ersten Teillinse gebildet. Die Teillinsen bestehen aus verschiedenen Materialien, wobei die erste Teillinse aus einem Material mit einer Brechzahl von höchstens 1,6 besteht. Diese Ausgestaltung ermöglicht es, Farbfehler zu korrigieren, ohne dass Rückreflexe der Beleuchtung, die bspw. an der Grenzfläche zwischen den beiden Teillinsen entstehen können, in die Beobachterpupillen geleitet werden. Die zweite Abschlusslinsenfläche des Negativglieds ist in der zweiten Teillinse gebildet.

Weiter vorteilhaft im Hinblick auf das Vermeiden des Einkoppelns von Rückreflexen in die Beobachterpupillen ist, dass die erste Abschlusslinsenfläche des Positivgliedes in Beobachtungsrichtung gesehen eine konvexe Krümmung mit einem Krümmungsradius von betragsmäßig Höchstens 130 mm besitzt.

Das Positivglied umfasst eine erste Konvexlinse und eine zweite Konvexlinse, wobei die erste Konvexlinse und die zweite Konvexlinse derart entlang der optischen Achse angeordnet sind, dass die zweite Konvexlinse der ersten Konvexlinse in Beobachtungsrichtung gesehen folgt. Die zweite Abschlusslinsenfläche des Positivglieds ist dann in der zweiten Konvexlinse gebildet. Weiterhin ist die erste Abschlusslinsenfläche des Positivglieds in der ersten Konvexlinse gebildet. Zwar können grundsätzlich zwischen den Konvexlinsen weitere Linsen vorhanden sein. Im Sinne einer kompakten Bauweise der Varioskopoptik ist es aber vorteilhaft, wenn das Positivglied in der beschriebenen Ausgestaltung ausschließlich aus der ersten Konvexlinse und der zweiten Konvexlinse besteht.

Die zweite Konvexlinse weist eine diese entgegen der Beobachtungsrichtung abschließende Linsenfläche auf, die in Beobachtungsrichtung gesehen eine konvexe Krümmung mit einem Krümmungsradius von betragsmäßig höchstens 120 mm besitzt. Zudem weist die erste Konvexlinse einen diese in Beobachtungsrichtung abschließende Linsenfläche mit einer in Beobachtungsrichtung gesehen konkaven Krümmung auf, wobei die konkaven Krümmung einen Krümmungsradius von betragsmäßig höchstens 450 mm besitzt.

Die erste oder die zweite Konvexlinse des Positivglieds kann aus einer ersten Teilkonvexlinse und einer zweiten Teilkonvexlinse zusammengesetzt sein, wobei die erste Teilkonvexlinse und die zweite Teilkonvexlinse derart entlang der optischen Achse angeordnet sind, dass die zweite Teilkonvexlinse der ersten Teilkonvexlinse in Beobachtungsrichtung gesehen folgt. Die beiden Teilkonvexlinsen sind in dieser Ausgestaltung aus verschiedenen Materialien hergestellt. Das Verwenden verschiedener Materialien ermöglicht es, Farbfehler der Optik zu verringern.

Im erfindungsgemäßen Mikroskop können aufgrund der Verwendung der Varioskopoptik Rückreflexe des durch das Positivglied und das Negativglied geführten Beleuchtungsstrahlengangs in die Beobachterpupillen unterdrückt werde, ohne dass hierfür ausgeschnittene Linsen oder Linsengruppen verwendet werden müssen. Das Hindurchführen des Beleuchtungsstrahlengangs durch die Linsen bzw. Linsengruppen der Varioskopoptik ohne Ausschnitte in den Linsen bzw. Linsengruppen ermöglicht es zudem, den Beleuchtungsstrahlengang näher an die optische Achse heranzuführen, so dass im Vergleich zu ausgeschnittenen Varioskopoptiken geringere Beleuchtungswinkel realisiert werden können.

Weiterhin bietet das Hindurchführen des Beleuchtungsstrahlenganges durch eine Varioskopoptik ohne Ausschnitte in den Linsen oder Linsengruppen den Vorteil, dass auch bei einer Änderung des Arbeitsabstandes die Zentrierung des Leuchtfeldes in Bezug auf das Gesichtsfeld erhalten bleibt, ohne dass die Optik der Beleuchtungsgruppe nachkorrigiert werden muss. Weiterhin kann die Optik der Beleuchtungsgruppe einfacher gehalten werden, da die Varioskopoptik als Teil der Beleuchtungsoptik dienen kann. Eigene optische Elemente in der Beleuchtungsoptik, die zum Nachführen des Arbeitsabstandes für die Beleuchtung dienen, können somit bei Verwendung der Varioskopoptik entfallen. Insbesondere besteht die Möglichkeit, Beleuchtungseinrichtungen zu verwenden, wie sie bspw. bei festbrennweitigen Objektiven zur Anwendung kommen. Der Wegfall eigener optischer Elemente zum Variieren des Arbeitsabstandes in der Beleuchtungseinrichtung ermöglicht zudem eine kompakte Bauweise der Beleuchtungsoptik und damit einhergehend auch des erfindungsgemäßen Mikroskops.

Insgesamt lassen sich daher die Herstellungskosten sowohl der Varioskopoptik als auch der Beleuchtungseinrichtung - und damit die Herstellungskosten des Mikroskops - gegenüber Mikroskopen mit Varioskopoptiken nach Stand der Technik verringern.

Obwohl Rückreflexe der Beleuchtungsstrahlung in die Beobachterpupillen im erfindungsgemäßen Mikroskop durch die Verwendung der Varioskopoptik bereits weitgehend vermieden werden können, können etwaige noch verbleibende Rückreflexe durch Anordnen einer Reflexblende im Beleuchtungsstrahlengang unterdrückt werden. Die Reflexblende kann hierbei vorteilhafter Weise zwischen einer Beleuchtungslichtquelle und einer ersten auf die Beleuchtungslichtquelle folgenden Linse angeordnet sein. Dabei ist es insbesondere vorteilhaft, wenn die Reflexblende nicht weiter als 5 mm von der Lichtquelle entfernt angeordnet ist. Wenn als Beleuchtungsoptik eine Köhlersche Beleuchtung Verwendung findet, ist die auf die Beleuchtungslichtquelle folgende Linse der Kollektor der Köhlerschen Beleuchtung. Die Reflexblende kann aber auch unmittelbar vor oder hinter einem Umlenkelement zum Umlenken des Beleuchtungsstrahlengangs angeordnet sein.

Als Lichtquellen kommen selbstleuchtende Lichtquellen wie etwa Glühlampen, Bogenlampen, Lumineszenzstrahler, etc. oder nicht selbstleuchtende Lichtquellen, wie bspw. das reelle Bild einer selbstleuchtenden Lichtquelle oder das Austrittsende eines Lichtleiters in Frage.

Wenn das Mikroskop als Stereomikroskop ausgebildet ist, weist dieses wenigstens zwei Beobachterpupillen auf, die bzgl. einer Symmetrieachse spiegelsymmetrisch angeordnet sind. Die Reflexblende kann dann insbesondere eine Blendenöffnung und einen in die Blendenöffnung hineinragenden Vorsprung aufweisen, der bzgl. einer Blendensymmetrieachse spiegelsymmetrisch angeordnet ist. Dabei verläuft eine Projektion der Blendensymmetrieachse in den Beobachterstrahlengang unter einem Winkel von nicht mehr als ± 3°, insbesondere nicht mehr als ± 1 ° zur Symmetrieachse der Beobachterpupillen. Es ist zudem vorteilhaft, wenn die Reflexblende derart um die optische Achse des Beleuchtungsstrahlenganges herum drehbar angeordnet ist, dass die Orientierung Blendensymmetrieachse in dem oben angegebenen Winkelbereich, also um ± 3° bzw. ± 1°, variiert werden kann. Dadurch kann die Orientierung der Reflexblende optimal an etwaige noch auftretende Reflexe angepasst werden.

Insgesamt blendet die Reflexblende max. 20 % der Fläche des Beleuchtungsstrahlenbüschels aus.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren.
- Figur 1: zeigt einen Ausschnitt aus einem erfindungsgemäßen Operationsmikroskop mit einer Varioskopoptik.
- Figur 2: zeigt ein konkretes Ausführungsbeispiel für eine Varioskopoptik.
- Figur 3: zeigt eine Tabelle mit den Designparametern des konkreten Ausführungsbeispiels aus Figur 2.
- Figur 4: zeigt ein alternatives konkretes Ausführungsbeispiel für eine Varioskopoptik.
- Figur 5: zeigt eine Tabelle mit den Designparametern des konkreten Ausführungsbeispiels aus Figur 4.
- Figur 6: zeigt eine Reflexblende zur Anordnung im Beleuchtungsstrahlengang eines Mikroskops.
- Figur 7: zeigt eine alternative Ausgestaltung für die Reflexblende.
- Figur 8: zeigt noch eine alternative Ausgestaltung für die Reflexblende.

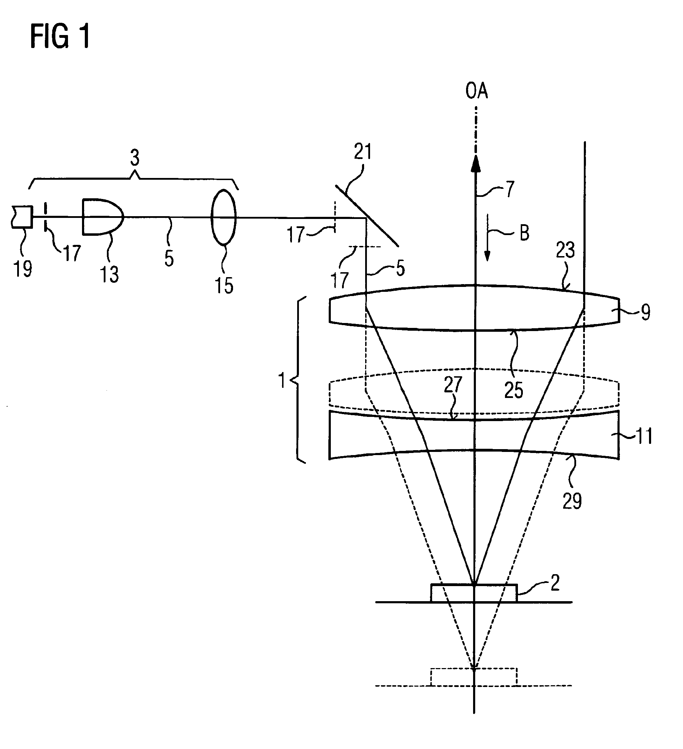

Ein erfindungsgemäßes Mikroskop wird nachfolgend mit Bezug auf Figur 1 beschrieben, die in einer schematisierten Darstellung einen Ausschnitt aus einem Operationsmikroskop zeigt. Der dargestellte Ausschnitt zeigt die Varioskopoptik 1 des Operationsmikroskops, die Beleuchtungsoptik 3 des Operationsmikroskops, den zum Beobachtungsobjekt 2 führenden Beleuchtungsstrahlengang 5 sowie den vom Beobachtungsobjekt 2 zum Beobachter (nicht dargestellt) führenden Beobachtungskanal 7. Der Beobachtungskanal 7 verläuft parallel zur optischen Achse OA und umfasst zwei stereoskopische Teilkanäle die in der in Figur 1 dargestellten Ansicht auf einer Sichtlinie mit der optischen Achse liegen, so dass die zugehörigen Teilstrahlengänge in der vorliegenden Ansicht nicht einzeln zu erkennen sind.

Im Beobachtungskanal folgt auf die Varioskopoptik in Richtung auf den nicht dargestellten Beobachter hin ein Vergrößerungswechsler, der als Zoomsystem oder als Galileiwechsler ausgestaltet sein kann. Während in einem Zoomsystem wenigstens drei entlang der optischen Achse hintereinander angeordnete Linsen vorhanden sind, von denen zwei entlang der optischen Achse verschiebbar sind, um eine stufenlose Einstellung des Vergrößerungsfaktors zu erzielen, sind in einem Galileiwechsler wenigstens zwei feststehende Linsenkombinationen vorhanden, die wechselweise in den Wechsel des Vergrößerungsfaktors Beobachtungsstrahlengang eingebracht werden können, um einen stufenweisen Vergrößerungswechsel zu erzielen. Die jeweils eingebrachte Linsenkombination bestimmt dann den Vergrößerungsfaktor.

An den Vergrößerungswechsler schließt sich zum Beobachter hin ein Binokulartubus an (ebenfalls nicht dargestellt), der mit optischen Okularen zur direkten Beobachtung oder mit elektronischen Okularen zur indirekten Beobachtung, bspw. mittels einer 3D-Brille, ausgestattet sein kann.

Das Operationsmikroskop kann darüber hinaus Schnittstellen zum Ein- oder Auskoppeln von Strahlenbündeln aus dem Beobachtungsstrahlengang aufweisen. Derartige Schnittstellen sind typischerweise als teildurchlässige Elemente, etwa als Strahlenteilerprismen, ausgebildet. An die Schnittstellen können bspw. Kameras oder Einblendvorrichtungen zum Einblenden von Bildern oder Daten in den Beobachterstrahlengang angeschlossen werden.

Die Varioskopoptik 1 des in Fig. 1 dargestellten Operationsmikroskops umfasst ein Positivglied, also ein optisches Element mit positiver Brechkraft, das in Fig. 1 schematisch als Konvexlinse 9 dargestellt ist. Darüber hinaus umfasst die Varioskopoptik 1 ein Negativglied, also ein optisches Element mit negativer Brechkraft, das in Fig. 1 schematisch als Konkavlinse 11 dargestellt ist. Das Negativglied 11 ist in Beobachtungsrichtung B gesehen dem Positivglied 9 nachgeschaltet, es befindet sich also zwischen dem Positivglied 9 und dem Beobachtungsobjekt 2. Im Folgenden sind alle Angaben zur Reihenfolge in der Anordnung optischer Elemente auf die Beobachtungsrichtung B bezogen, d.h. die optischen Elemente sind jeweils in Richtung vom Beobachter zum Beobachtungsobjekt angegeben. Gleiches gilt, wenn eine Linsenfläche als konkav oder konvex beschrieben ist. Eine in Beobachtungsrichtung gesehen konvexe Linsenfläche weist einen bezogen auf die Beobachtungsrichtung B positiven Krümmungsradius auf, d.h. die entsprechende Fläche wölbt sich dem Beobachter entgegen. Eine konkave Linsenfläche weist bezogen auf die Beobachtungsrichtung B einen negativen Krümmungsradius auf, so dass sich die entsprechende Fläche dem Beobachtungsobjekt 2 entgegenwölbt.

Im dargestellten Ausführungsbeispiel ist das Negativglied 11 fix angeordnet, wohingegen das Positivglied 9 entlang der optischen Achse OA verschiebbar angeordnet ist. Durch Verschieben des Positivgliedes 9 lässt sich die Schnittweite der Zoomoptik variieren, wie in Fig. 1 gestrichelt dargestellt ist. In der rechten Seite der Varioskopoptik ist dabei die Änderung des Verlaufes eines Beobachtungsstrahlenbündels dargestellt, in der linken Seite der Varioskopoptik die Änderung des Verlaufes eines Beleuchtungsstrahlenbündels. Wenn das Positivglied 9 in die in Fig. 1 gestrichelt dargestellte Position verschoben wird, verlängert sich die Schnittweite, so dass sich der Arbeitsabstand des Mikroskops vom Beobachtungsobjekt 2 ändert.

Obwohl in Fig. 1 das Positivglied 9 verschiebbar ausgestaltet ist, besteht auch die Möglichkeit, statt des Positivglieds 9 das Negativglied 11 entlang der optischen Achse bewegbar anzuordnen. Das Negativglied 11 bildet jedoch häufig die Abschlusslinse des Mikroskopobjektivs. Ein feststehendes Negativglied bietet daher den Vorteil, dass das Innere des Operationsmikroskops leichter gegen äußere Einflüsse abgedichtet werden kann. Weiterhin sei angemerkt, dass, obwohl das Positivglied 9 und das Negativglied 11 in Fig. 1 lediglich als Einzellinsen dargestellt sind, jedes dieser Glieder statt in Form einer Einzellinse auch in Form einer Linsengruppe realisiert sein kann. Dies wird nachfolgend im Rahmen der Beschreibung konkreter Ausführungsbeispiele für die Varioskopoptik deutlich.

Die Beleuchtungsoptik 3 des Operationsmikroskops ist im vorliegenden Ausführungsbeispiel als Köhlersche Optik ausgebildet. Eine solche umfasst einen Kollektor 13, der im vorliegenden Ausführungsbeispiel als Einzellinse dargestellt ist, aber auch als Linsenkombination ausgebildet sein kann, sowie einen Kondensor 15, der ebenfalls als Einzellinse dargestellt ist, aber auch als Linsenkombination ausgebildet sein kann. Anstelle einer Köhlerschen Beleuchtung können auch andere Beleuchtungsprinzipien eingesetzt werden.

Die Beleuchtungsoptik 3 umfasst auch eine Reflexblende 17, deren Bedeutung später noch erläutert werden wird.

Als Lichtquelle ist im vorliegenden Ausführungsbeispiel das Austrittsende eines Lichtleiters 19 vorhanden. Statt eines Lichtleiteraustrittsendes, also einer nicht selbstleuchtenden Lichtquelle, kann aber auch eine selbstleuchtende Lichtquelle vorhanden sein, bspw. eine Glühlampe, eine Gasentladungslampe oder eine Lumineszenzstrahler, insbesondere ein Elektrolumineszenzstrahler wie etwa eine LED. Das Austrittsende eines Lichtleiters bietet jedoch den Vorteil, dass die in der Regel zu kühlende selbstleuchtende Lichtquelle vom Hauptkörper des Operationsmikroskops entfernt angeordnet sein kann, so dass Schwingungen, die durch die Kühlung der selbstleuchtenden Lichtquelle mittels Ventilatoren entstehen, vom Operationsmikroskop entkoppelt werden können.

Mittels eines Umlenkelements 21, das bspw. als Umlenkspiegel oder Umlenkprisma ausgebildet sein kann, wird der Beleuchtungsstrahlengang 5 im erfindungsgemäßen Mikroskop durch die Varioskopoptik 1 hindurchgeführt. Die Parameter der Varioskopoptik sind dabei so gewählt, dass Rückreflexe an den Linsenflächen der Varioskopoptik nicht in die Beobachtungspupillen des Beobachtungsstrahlengangs gelangen.

Im Rahmen der nachfolgenden Beschreibung der Parameter der Varioskopoptik werden folgende Definitionen verwendet:
Als erste Abschlusslinsenfläche 23 des Positivgliedes wird die das Positivglied 9 entgegen der Beobachtungsrichtung B abschließende Linsenfläche angesehen, also die dem Beobachter zugewandte Linsenfläche 23 des Positivgliedes.

Als zweite Abschlusslinsenfläche des Positivglieds 9 wird die das Positivglied 9 in Beobachtungsrichtung B abschließende Linsenfläche 25, also die dem Beobachtungsobjekt 2 zugewandte Linsenfläche angesehen.

Als erste Abschlusslinsenfläche des Negativgliedes 11 wird die das Negativglied 11 entgegen der Beobachtungsrichtung B abschließende Linsenfläche 27, also die dem Beobachter zugewandte Linsenfläche, angesehen.

Als zweite Abschlusslinsenfläche 29 des Negativgliedes 11 wird die das Negativglied 11 in Beobachtungsrichtung abschließende Linsenfläche 29, also die dem Beobachtungsobjekt 2 zugewandte Linsenfläche, angesehen.

Obwohl in Fig. 1 die erste Abschlusslinsenfläche und die zweite Abschlusslinsenfläche des jeweiligen Gliedes als zur selben Linse gehörig dargestellt sind, können diese Flächen auch zu verschiedenen Linsen einer das entsprechende Glied bildenden Linsengruppe gehören.

Um Rückreflexe in die Beobachterpupillen des Beobachtungsstrahlengangs zu vermeiden, weisen die zweite Abschlusslinsenfläche 25 des Positivgliedes 9 und die erste Abschlusslinsenfläche 27 des Negativgliedes 11, die beide in Beobachtungsrichtung gesehen konkav ausgebildet sind, jeweils ein Krümmungsradius mit einem Betrag von höchstens 500 mm auf. Typischerweise beträgt der Krümmungsradius dieser Abschlusslinsenflächen wenigstens 300 mm, er kann jedoch auch darunter liegen. Die zweite Abschlusslinsenfläche 29 des Negativgliedes 11, die in Beobachtungsrichtung gesehen konvex gekrümmt ist, weist einen Krümmungsradius mit einem Betrag von höchstens 70 mm auf. In der Regel wird der Krümmungsradius weniger als 50 mm betragen, er kann jedoch auch darunter liegen.

Wenn das Negativglied 11 als ein aus zwei Teillinsen zusammengesetztes Kittglied ausgebildet ist und die Teillinsen aus verschiedenen Materialien, insbesondere aus verschiedenen Gläsern bestehen, ist es im Hinblick auf das Vermeiden von Rückreflexen in die Beobachterpupillen des Beobachtungsstrahlengangs vorteilhaft, wenn die erste Teillinse aus einem Material mit einer Brechzahl von höchstens 1,6 besteht. Als erste Teillinse wird hierbei die dem Beobachter zugewandte Teillinse angesehen, als zweite Teillinse diejenige Teillinse, die der ersten Teillinse in Beobachtungsrichtung gesehen, folgt, also die dem Beobachtungsobjekt 2 zugewandte Teillinse.

Im vorliegenden Ausführungsbeispiel ist es im Hinblick auf das Vermeiden von Rückreflexen vorteilhaft, wenn die in Beobachtungsrichtung gesehen konvex gekrümmte erste Abschlusslinsenfläche 23 des Positivgliedes 9 einen Krümmungsradius von betragsmäßig höchstens 130 mm besitzt. Diese Einschränkung ist jedoch nicht zwingend und stellt lediglich eine vorteilhafte Option dar.

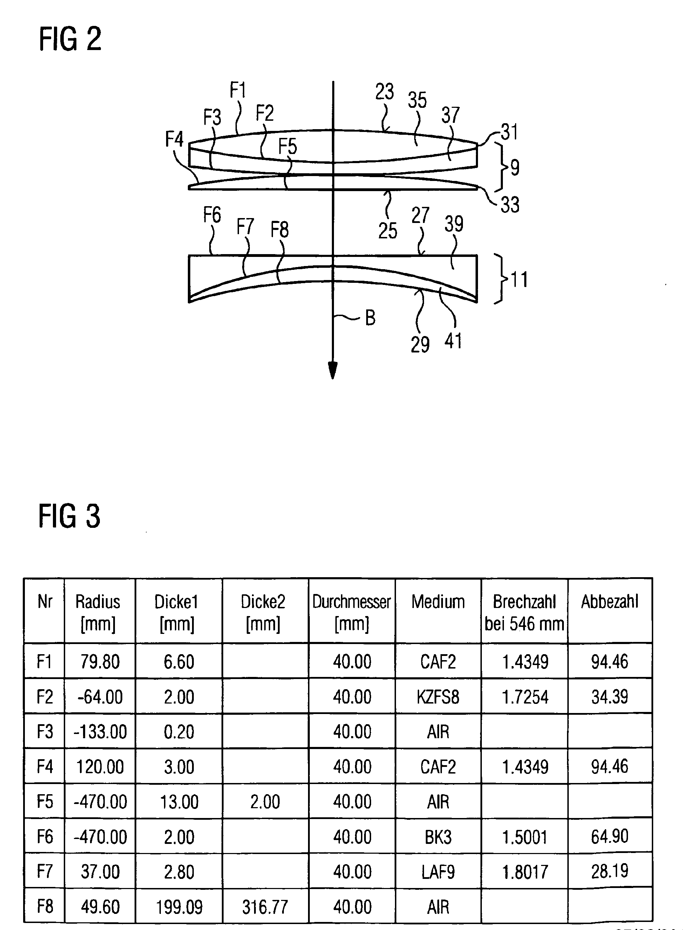

Konkrete Designbeispiele für die Varioskopoptik werden nachfolgend mit Bezug auf die Figuren 2 und 3 beschrieben.

Fig. 2 zeigt ein erstes Designbeispiel für die Varioskopoptik. In diesem Designbeispiel ist das Positivglied 9 als Linsengruppe mit einer ersten Konvexlinse 31 und einen zweiten Konvexlinse 33 ausgebildet. Die erste Konvexlinse 31 ist dabei als Kittglied ausgebildet, das aus einer ersten Teilkonvexlinse 35 und einer zweiten Teilkonvexlinse 37 zusammengesetzt ist. Die zweite Teilkonvexlinse 37 folgt dabei der ersten Teilkonvexlinse 35 in Beobachtungsrichtung nach. Der Begriff Teilkonvexlinse soll hierbei nicht bedeuten, dass jede der beiden die erste Konvexlinse 31 bildenden Teillinsen als Konvexlinse ausgebildet ist, sondern lediglich dass die jeweilige Teillinse Teil einer Konvexlinse ist. Tatsächlich ist die zweite Teilkonvexlinse 37 im vorliegenden Ausführungsbeispiel eine zerstreuende Linse und damit als Konkavlinse ausgebildet.

In der das Positivglied 9 bildenden Linsengruppe ist die erste Abschlusslinsenfläche 23 des Positivgliedes 9 eine Linsenfläche der ersten Teilkonvexlinse 35 in der ersten Konvexlinse 31. Die zweite Abschlusslinsenfläche 25 des Positivglieds 9 ist eine Linsenfläche der zweiten Konvexlinse 33.

Das Negativglied 11 ist als Kittglied ausgebildet, das aus einer ersten Teillinse 39 und einer der ersten Teillinse in Beobachtungsrichtung B nachfolgenden zweiten Teillinse 41 zusammengesetzt ist. Die erste Abschlusslinsenfläche 27 des Negativglieds 11 ist somit eine Linsenfläche der ersten Teillinse 39, die zweite Abschlusslinsenfläche 29 des Negativglieds 11 eine Linsenfläche der zweiten Teillinse 41. Die Parameter der einzelnen Linsen sowie der Linsenflächen F1 bis F8 sind in der Tabelle aus Figur 3 wiedergegeben:
In dem in Figur 2 dargestellten Designbeispiel kann entweder das Positivglied 9 oder das Negativglied 11 entlang der optischen Achse OA bewegbar ausgestaltet sein. Grundsätzlich ist es auch möglich, beide Glieder entlang der optischen Achse OA bewegbar auszugestalten. In diesem Fall muss eine Bewegung der beiden Glieder aber auch zu einer Relativbewegung zwischen den beiden Gliedern führen. Es ist jedoch ausreichend und konstruktive einfacher, wenn lediglich eines der beiden Glieder beweglich angeordnet ist.

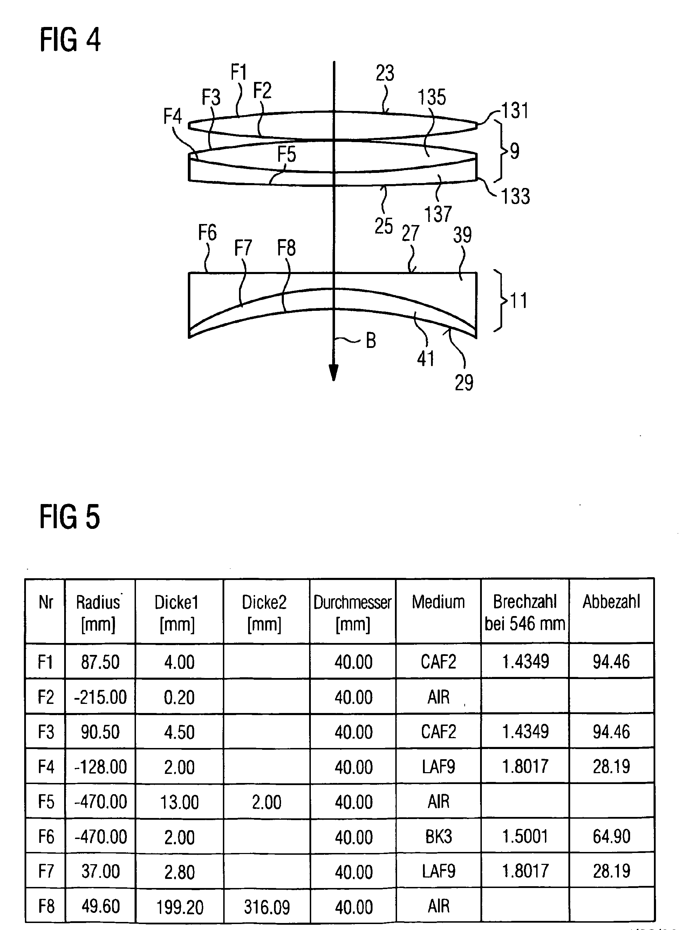

Ein zweites Designbeispiel für die Varioskopoptik ist in Fig. 4 dargestellt. Das Negativglied 11 unterscheidet sich dabei nicht vom Negativglied des in Fig. 2 dargestellten Designbeispiels. Der Unterschied zwischen dem in Fig. 4 dargestellten Designbeispiel und dem in Fig. 2 dargestellten Designbeispiel liegt im Positivglied 9. Wie im ersten Designbeispiel ist das Positivglied 9 auch im zweiten Designbeispiel als Linsengruppe mit einer ersten Konvexlinse 131 und einer zweiten Konvexlinse 133 ausgebildet, wobei die zweite Konvexlinse 133 der ersten Konvexlinse 131 in Beobachtungsrichtung B nachfolgend angeordnet ist. Im Unterschied zum ersten Designbeispiel ist jedoch die zweite Konvexlinse 133 als Kittglied ausgebildet, das aus einer ersten Teilkonvexlinse 135 und einer zweiten Teilkonvexlinse 137 zusammengesetzt ist. Die erste Abschlusslinsenfläche 23 ist eine Linsenfläche der ersten Konvexlinse 133, die zweite Abschlusslinsenfläche 25 eine Linsenfläche der zweiten Teilkonvexlinse 137 in der zweiten Konvexlinse 133. Die Designparameter der Linsen bzw. Linsenflächen F1 bis F8 des zweiten Designbeispiels sind in der Tabelle aus Figur 5 zusammengefasst.

Wie im ersten Designbeispiel ist auch im zweiten Designbeispiel das Positivglied 9 oder das Negativglied 11 entlang der optischen Achse verschiebbar angeordnet. Auch hierbei gilt wieder, dass es grundsätzlich auch möglich ist, beide Glieder entlang der optischen Achse derart bewegbar anzuordnen, dass die Bewegung beider Glieder zu einer Relativbewegung zwischen den beiden Gliedern führt.

Wenn in der Varioskopoptik das Positivglied 9 wie in den beschriebenen Designbeispielen von einer Linsengruppe mit einer ersten Konvexlinse 31, 131 und einer zweiten Konvexlinse 33, 133 gebildet ist, ist es im Hinblick auf das Vermeiden von Rückreflexen in die Beobachterpupillen des Beobachtungsstrahlenganges vorteilhaft, wenn die zweite Konvexlinse 33, 133 eine diese entgegen der Beobachtungsrichtung abschließende Linsenfläche aufweist, die in Beobachtungsrichtung gesehen, eine konkave Krümmung mit einem Krümmungsradius von betragsmäßig höchstens 120 mm besitzt. Im ersten Designbeispiel wäre dies die Fläche F4, im zweiten Designbeispiel die Fläche F3. Das beschriebene Merkmal ist jedoch nur optional und für die Ausführung der Erfindung nicht zwingend.

Weiterhin ist es bei einem aus einer Linsengruppe mit zwei Konvexlinsen bestehenden Positivglied 9 vorteilhaft, wenn die erste Konvexlinse 31,131 eine diese in Beobachtungsrichtung abschließende Linsenfläche aufweist, die in Beobachtungsrichtung eine konkave Krümmung mit einem Krümmungsradius von betragsmäßig höchstens 450 mm besitzt. Im Designbeispiel 1 wäre dies die Fläche F3, im Designbeispiel 2 die Fläche F2. Auch hier gilt, dass dies lediglich eine optionale Ausgestaltung darstellt, die zum Realisieren der vorliegenden Erfindung nicht zwingend notwendig ist.

Zwar können mit der Varioskopoptik Rückreflexe in den Beobachtungsstrahlengang, die in die Beobachterpupillen gelangen, weitgehend vermieden werden, insbesondere wenn auch die optionalen Designmerkmale realisiert sind, jedoch kann es bspw. in Extremstellungen des beweglichen Gliedes der Varioskopoptik noch immer zu geringfügigen Rückreflexen in die Beobachterpupillen kommen, wenn keine weiteren Maßnahmen getroffen sind. In vielen Fällen können diese Rückreflexe hingenommen werden, insbesondere wenn das Einnehmen der extremen Position des beweglichen Gliedes in der Regel nicht zu erwarten ist. Um aber auch diese Rückreflexe zu beseitigen, ist im vorliegenden Ausführungsbeispiel für ein erfindungsgemäßes Mikroskop eine Reflexblende 17 im Beleuchtungsstrahlengang 3 angeordnet (siehe Fig. 1). Diese Reflexblende ist so im Beleuchtungsstrahlengang angeordnet, dass die Beleuchtung des Objekts nicht wesentlich beeinträchtigt wird.

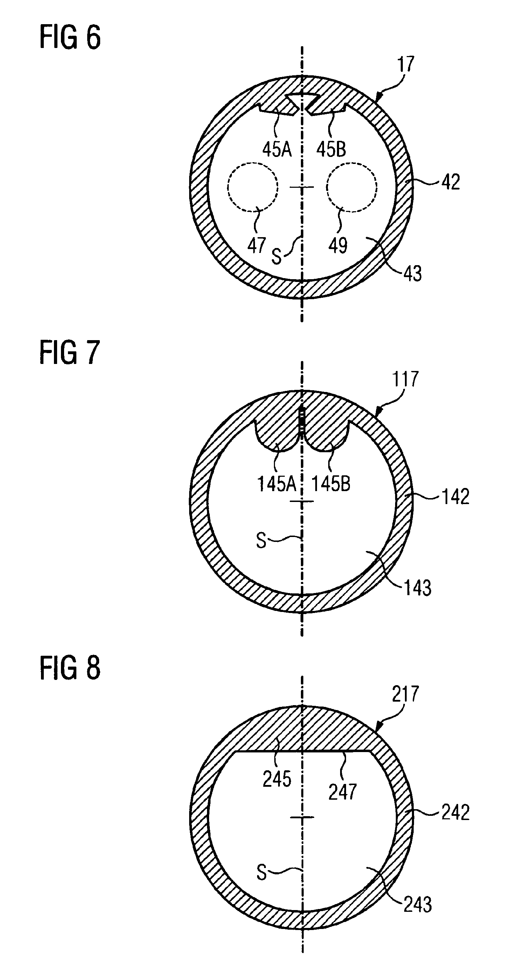

Ein Beispiel für eine Ausgestaltung der Reflexblende ist in Figur 6 dargestellt.

Die Reflexblende 17 ist als Kreisring 42 mit einer zentralen Aussparung 43 ausgebildet, wobei in einen Bereich der zentralen Aussparung 43 zwei polygonförmige Vorsprünge 45A, 45B hineinragen. Die Vorsprünge sind bzgl. einer in der Blendenebene liegenden Symmetrieachse S (nachfolgend als Blendensymmetrieachse bezeichnet) symmetrisch angeordnet. Die Projektion der Blendensymmetrieachse S in den Beobachtungsstrahlengang, der in Fig. 6 durch die beiden Beobachterpupillen 47, 49 angedeutet ist, verläuft deckungsgleich zu derjenigen Symmetrieachse, bzgl. der die Beobachterpupillen 47, 49 spiegelsymmetrisch angeordnet sind. Es kann jedoch zum optimalen Ausblenden etwaiger Restreflexe sinnvoll sein, wenn die Projektion der Blendensymmetrieachse einen Winkel mit der Symmetrieachse der Beobachterpupillen einschließt. Dieser Winkel beträgt max. ± 3°, typischerweise max. ± 1°. Besonders vorteilhaft ist es, wenn die Reflexblende zum Einstellen dieses Winkels um die optische Achse des Beleuchtungsstrahlenganges herum um bis zu ± 3° bzw. ± 1° gedreht werden kann. Was mit Bezug auf die Orientierung der Projektion der Blendensymmetrieachse S zu dem in Fig. 6 dargestellten Ausführungsbeispiel die Reflexblende gesagt worden ist, gilt entsprechend auch für die nachfolgend mit Bezug auf die Fig. 7 und 8 beschriebenen Ausführungsbeispiele für die Reflexblende.

Die Reflexblende kann insbesondere zwischen der Lichtquelle und der ersten Linse der Beleuchtungsoptik 3 angeordnet sein, im vorliegenden Ausführungsbeispiel also zwischen dem Lichtleiteraustrittsende 19 und dem Kollektor 13. Vorzugsweise ist sie nicht weiter als 5 mm vom Austrittsende des Lichtleiters bzw. der jeweiligen Lichtquelle entfernt. Alternative Positionen der Reflexblende sind unmittelbar vor oder hinter dem Umlenkelement 21, wie in Fig. 1 gestrichelt angedeutet ist.

Der Durchmesser der vom Kreisring 42 umgebenen zentralen Aussparung 43 ist so gewählt, dass er dem Durchmesser des Beleuchtungsstrahlenbündels entspricht.

Alternative Ausführungsformen für die Reflexblende sind in den Fig. 7 und 8 dargestellt. Die Reflexblende 117 aus Fig. 7 unterscheidet sich von der Reflexblende 17 aus Fig. 6 dadurch, dass die von ihrem Kreisring 142 ausgehenden Vorsprünge 145a, 145B nicht als Polygonflächen, sondern als Halbkreise oder Teilellipsen ausgebildet sind.

In der in Fig. 8 dargestellte Ausführungsvariante der Reflexblende 217 sind die vom Kreisring ausgehenden Vorsprünge durch eine Fläche 245 ersetzt, die durch eine Sekante 247 des Kreisrings 245 begrenzt ist.

In allen Reflexblenden ist der in die zentrale Öffnung hineinragende Bereich zum Abblenden der Beleuchtungsstrahlung so gewählt, dass im Leuchtfeld nicht mehr als 20 % der Fläche des Beleuchtungsstrahlenbüschels abgeschattet werden. Außerdem ist er spiegelsymmetrisch bzgl. der Blendensymmetrieachse S ausgebildet.

Das anhand von Ausführungsbeispielen beschriebene Mikroskop bzw. die anhand von Ausführungsbeispielen beschriebene Varioskopoptik ermöglichen es, den Beleuchtungsstrahlengang durch die Varioskopoptik hindurch zu führen, ohne dass hierfür die Linsen der Varioskopoptik ausgeschnitten werden müssen. Rückreflexe in die Beobachterpupillen werden durch eine spezielle Wahl der Optikparameter der Varioskopoptik vermieden. Etwaige dennoch verbleibende Rückreflexe in die Beobachterpupillen können durch eine Reflexblende beseitigt werden.

Obwohl die Erfindung anhand konkreter Ausführungsbeispiele beschrieben worden ist, kann von den lediglich zu Illustrationszwecken beschriebenen Ausführungsbeispielen abgewichen werden. Beispielsweise braucht die Varioskopoptik nicht in ein Mikroskop integriert zu sein. Stattdessen kann sie als eigenständige Einheit ausgebildet sein, die bspw. gegen ein festbrennweitiges Hauptobjektiv eines Mikroskops ausgetauscht werden kann. Die Erfindung soll daher nicht durch die konkreten Ausführungsbeispiele, sondern nur durch die beigefügten Ansprüche beschränkt sein.

### Bezugszeichenliste

- 1: Varioskopoptik
- 2: Beobachtungsobjekt
- 3: Beleuchtungsoptik
- 5: Beleuchtungsstrahlengang
- 7: Beobachtungsstrahlengang
- 9: Positivglied
- 11: Negativglied
- 13: Kollektor
- 15: Kondensor
- 17: Reflexblende
- 19: Lichtleiteraustrittsende
- 21: Umlenkelement
- 23: erste Abschlusslinsenfläche des Positivgliedes
- 25: zweite Abschlusslinsenfläche des Positivgliedes
- 27: erste Abschlusslinsenfläche des Negativgliedes
- 29: zweite Abschlusslinsenfläche des Negativgliedes
- 31: Konvexlinse
- 33: Konvexlinse
- 35: Teilkonvexlinse
- 37: Teilkonvexlinse
- 39: Teillinse
- 41: Teillinse
- 43: Zentrale Aussparung
- 45a,b: Vorsprung
- 47, 49: Beobachtungspupille
- 117: Reflexblende
- 131: Konvexlinse
- 133: Konvexlinse
- 135: Teilkonvexlinse
- 137: Teilkonvexlinse
- 143: Zentrale Aussparung
- 145a,b: Vorsprung
- 217: Reflexblende
- 243: Zentrale Aussparung
- 245a: Vorsprung
- 247: Sekante

## Patentansprüche

1. Mikroskop mit einer Varioskopoptik mit einem aus einer Linse oder Linsengruppe gebildeten, eine positive Brechkraft aufweisenden Positivglied (9) und einem aus einer Linse oder Linsengruppe gebildeten, eine negative Brechkraft aufweisenden Negativglied (11), wobei
- das Positivglied (9) und das Negativglied (11) derart entlang einer optischen Achse (OA) angeordnet sind, dass das Negativglied (11) dem Positivglied (9) in einer Beobachtungsrichtung (B) gesehen nachfolgend angeordnet ist,
- wenigstens das Positivglied (9) oder das Negativglied (11) entlang der optischen Achse verschiebbar angeordnet ist,
- das Positivglied (9) eine das Positivglied entgegen der Beobachtungsrichtung (B) abschließende erste Abschlusslinsenfläche (23) und eine das Positivglied (9) in Beobachtungsrichtung abschließende zweite Abschlusslinsenfläche (25) aufweist und das Positivglied (9) eine erste Konvexlinse (31, 131) und eine zweite Konvexlinse (33, 133) umfasst, wobei die zweite Konvexlinse (33, 133) eine diese entgegen der Beobachtungsrichtung (B) abschließende Linsenfläche aufweist, die erste Konvexlinse (31, 131) und die zweite Konvexlinse (33, 133) derart entlang der optischen Achse (OA) angeordnet sind, dass die zweite Konvexlinse (33, 133) der ersten Konvexlinse (31, 131) in Beobachtungsrichtung (B) gesehen folgt, und die zweite Abschlusslinsenfläche (25) des Positivglieds (9) in der zweiten Konvexlinse (33, 133) gebildet ist und die erste Abschlusslinsenfläche (23) des Positivglieds (9) in der ersten Konvexlinse (31, 131) gebildet ist, und
- das Negativglied (11) eine das Negativglied (11) entgegen der Beobachtungsrichtung (B) abschließende erste Abschlusslinsenfläche (27) und eine das Negativglied (11) in Beobachtungsrichtung abschließende zweite Abschlusslinsenfläche (29) aufweist, und das Negativglied (11) eine aus einer ersten Teillinse (39) und einer zweiten Teillinse (41) zusammengesetzte Linse ist, wobei die erste Teillinse (39) und die zweite Teillinse (41) derart entlang der optischen Achse (OA) angeordnet sind, dass die zweite Teillinse (41) der ersten Teillinse (39) in Beobachtungsrichtung (B) gesehen folgt, die erste Abschlusslinsenfläche (27) des Negativglieds (11) in der ersten Teillinse (39) gebildet ist und die zweite Abschlusslinsenfläche (29) des Negativglieds (11) in der zweiten Teillinse (41) gebildet ist, wobei
- die zweite Abschlusslinsenfläche (25) des Positivglieds (9) und die erste Abschlusslinsenfläche (27) des Negativglieds (11) in Beobachtungsrichtung (B) gesehen konkav ausgebildet sind und die zweite Abschlusslinsenfläche (29) des Negativglieds (11) in Beobachtungsrichtung (B) gesehen konvex ausgebildet ist,
- und wobei eine Beleuchtungslichtquelle (19) und ein zu einem Beobachtungsobjekt (2) führender Beleuchtungsstrahlengang (5) vorhanden sind,
**dadurch gekennzeichnet, dass**
- der Beleuchtungsstrahlengang (5) durch das Positivglied (9) sowie durch das Negativglied (11) der Varioskopoptik hindurch zum Beobachtungsobjekt (2) führt,
- die zweite Abschlusslinsenfläche (25) des Positivglieds (9) und die erste Abschlusslinsenfläche (27) des Negativglieds (11) jeweils einen Krümmungsradius mit einem Betrag von höchstens 500 mm aufweisen,
- die zweite Abschlusslinsenfläche (29) des Negativglieds (11) einen Krümmungsradius mit einem Betrag von höchstens 70 mm aufweist,
- die erste Abschlusslinsenfläche (23) des Positivglieds (9) in Beobachtungsrichtung (B) gesehen eine konvexe Krümmung mit einem Krümmungsradius von betragsmäßig höchstens 130 mm besitzt,
- die erste Konvexlinse (31, 131) des Positivglieds (9) eine diese in Beobachtungsrichtung (B) abschließende Linsenfläche aufweist, die in Beobachtungsrichtung (B) gesehen eine konkave Krümmung mit einem Krümmungsradius von betragsmäßig höchstens 450 mm besitzt,
- die zweite Konvexlinse (33, 133) des Positivglieds (9) eine diese entgegen der Beobachtungsrichtung (B) abschließende Linsenfläche aufweist, die in Beobachtungsrichtung (B) gesehen eine konvexe Krümmung mit einem Krümmungsradius von betragsmäßig höchstens 120 mm besitzt und
- die Teillinsen (39, 41) des Negativglieds (11) aus verschiedenen Materialien bestehen, wobei die erste Teillinse (39) aus einem Material mit einer Brechzahl von höchstens 1,6 besteht,

2. Mikroskop nach Anspruch 1, **dadurch gekennzeichnet, dass** die erste oder die zweite Konvexlinse aus einer ersten Teilkonvexlinse (35, 135) und einer zweiten Teilkonvexlinse (37, 137) zusammengesetzt ist, wobei die erste Teilkonvexlinse (35, 135) und die zweite Teilkonvexlinse (37, 137) derart entlang der optischen Achse (OA) angeordnet sind, dass die zweite Teilkonvexlinse (37, 137) der ersten Teilkonvexlinse (35, 135) in Beobachtungsrichtung (B) gesehen folgt, wobei die Teilkonvexlinsen aus verschiedenen Materialien bestehen.

3. Mikroskop nach Anspruch 1 oder Anspruch 2, **dadurch gekennzeichnet, dass** eine Reflexblende (17, 117, 217) im Beleuchtungsstrahlengang (5) angeordnet ist.

4. Mikroskop nach Anspruch 3, **dadurch gekennzeichnet, dass** die Reflexblende (17, 117, 217) zwischen einer Beleuchtungslichtquelle (19) und einer ersten auf die Beleuchtungslichtquelle (19) folgenden Linse (13) angeordnet ist.

5. Mikroskop nach Anspruch 4, **dadurch gekennzeichnet, dass** als die Reflexblende (17, 117, 127) nicht weiter als 5 mm von der Lichtquelle entfernt angeordnet ist.

6. Mikroskop nach einem der Ansprüche 1 bis 5, **dadurch gekennzeichnet, dass** die Reflexblende (17, 117, 127) unmittelbar vor oder hinter einem Umlenkelement (21) zum Umlenken des Beleuchtungsstrahlenganges (5) angeordnet ist.

7. Mikroskop nach einem der Ansprüche 1 bis 6, **dadurch gekennzeichnet, dass** es als Stereomikroskop mit zwei bezgl. einer Symmetrieachse spiegelsymmetrisch angeordneten Beobachterpupillen ausgestaltet ist und die Reflexblende (17, 117, 217) eine Blendenöffnung (43, 143, 243), eine Blendensymmetrieachse (S) sowie wenigstens einen zur Blendensymmetrieachse (S) spiegelsymmetrisch angeordneten Vorsprung (45a, 45b, 145a, 145b, 245) aufweist, welcher in die Blendenöffnung (43, 143, 243) hineinragt.

8. Mikroskop nach Anspruch 7, **dadurch gekennzeichnet, dass** die Reflexblende innerhalb einer senkrecht zur optischen Achse des Beleuchtungsstrahlenganges (5) verlaufenden Ebene um bis zu ± 3 Grad um die optische Achse des Beleuchtungsstrahlenganges (5) gedreht werden kann.

9. Mikroskop nach einem der Ansprüche 1 bis 8, **dadurch gekennzeichnet**, das die Reflexblende (17, 117, 127) maximal 20% der Fläche des Beleuchtungsstrahlenbüschels ausmacht.

## Claims

1. Microscope having a varioscope optical unit comprising a positive member (9), which is formed of a lens or lens group and has a positive refractive power, and a negative member (11), which is formed of a lens or lens group and has a negative refractive power, wherein
- the positive member (9) and the negative member (11) are arranged along an optical axis (OA) in such a way that the negative member (11) is arranged after the positive member (9) as seen in an observation direction (B),
- at least the positive member (9) or the negative member (11) is arranged such as to be able to be displaced along the optical axis,
- the positive member (9) has a first terminating lens surface (23), which terminates the positive member counter to the observation direction (B), and a second terminating lens surface (25), which terminates the positive member (9) in the observation direction, and the positive member (9) comprises a first convex lens (31, 131) and a second convex lens (33, 133), wherein the second convex lens (33, 133) has a lens surface which terminates said second convex lens counter to the observation direction (B), the first convex lens (31, 131) and the second convex lens (33, 133) are arranged along the optical axis (OA) in such a way that the second convex lens (33, 133) follows the first convex lens (31, 131) as seen in the observation direction (B), and the second terminating lens surface (25) of the positive member (9) is formed in the second convex lens (33, 133) and the first terminating lens surface (23) of the positive member (9) is formed in the first convex lens (31, 131), and
- the negative member (11) has a first terminating lens surface (27), which terminates the negative member (11) counter to the observation direction (B), and a second terminating lens surface (29), which terminates the negative member (11) in the observation direction, and the negative member (11) is a lens composed of a first partial lens (39) and a second partial lens (41), wherein the first partial lens (39) and the second partial lens (41) are arranged along the optical axis (OA) in such a way that the second partial lens (41) follows the first partial lens (39) as seen in the observation direction (B), the first terminating lens surface (27) of the negative member (11) is formed in the first partial lens (39) and the second terminating lens surface (29) of the negative member (11) is formed in the second partial lens (41), wherein
- the second terminating lens surface (25) of the positive member (9) and the first terminating lens surface (27) of the negative member (11) are concave as seen in the observation direction (B), and the second terminating lens surface (29) of the negative member (11) is convex as seen in the observation direction (B),
- and wherein an illumination light source (19) and an illumination beam path (5) leading to an observation object (2) are provided,
**characterized in that**
- the illumination beam path (5) leads through the positive member (9) and through the negative member (11) of the varioscope optical unit to the observation object (2),
- the second terminating lens surface (25) of the positive member (9) and the first terminating lens surface (27) of the negative member (11) each have a radius of curvature with an absolute value of at most 500 mm,
- the second terminating lens surface (29) of the negative member (11) has a radius of curvature with an absolute value of at most 70 mm,
- the first terminating lens surface (23) of the positive member (9) has a convex curvature, as seen in the observation direction (B), having a radius of curvature with an absolute value of at most 130 mm,
- the first convex lens (31, 131) of the positive member (9) has a lens surface, terminating said first convex lens in the observation direction (B), which has a concave curvature, as seen in the observation direction (B), having a radius of curvature with an absolute value of at most 450 mm,
- the second convex lens (33, 133) of the positive member (9) has a lens surface, terminating said second convex lens counter to the observation direction (B), which has a convex curvature, as seen in the observation direction (B), having a radius of curvature with an absolute value of at most 120 mm, and
- the partial lenses (39, 41) of the negative member (11) are made of different materials, the first partial lens (39) being made of a material having a refractive index of at most 1.6.

2. Microscope according to claim 1, **characterized in that** the first or the second convex lens is composed of a first partial convex lens (35, 135) and a second partial convex lens (37, 137), wherein the first partial convex lens (35, 135) and the second partial convex lens (37, 137) are arranged along the optical axis (OA) in such a way that the second partial convex lens (37, 137) follows the first partial convex lens (35, 135) as seen in the observation direction (B), the partial convex lenses being made of different materials.

3. Microscope according to claim 1 or claim 2, **characterized in that** a reflection shield (17, 117, 217) is arranged in the illumination beam path (5).

4. Microscope according to claim 3, **characterized in that** the reflection shield (17, 117, 217) is arranged between an illumination light source (19) and a first lens (13) following the illumination light source (19).

5. Microscope according to claim 4, **characterized in that** the reflection shield (17, 117, 217) is arranged at a distance of no more than 5 mm from the light source.

6. Microscope according to any of claims 1 to 5, **characterized in that** the reflection shield (17, 117, 217) is arranged immediately in front of or behind a deflection element (21) for deflecting the illumination beam path (5).

7. Microscope according to any of claims 1 to 6, **characterized in that** it is configured as a stereo microscope having two observer pupils arranged in a mirror-symmetrical manner with respect to an axis of symmetry, and the reflection shield (17, 117, 217) has a shield aperture (43, 143, 243), a shield axis of symmetry (S) and at least one protrusion (45a, 45b, 145a, 145b, 245) which is arranged in a mirror-symmetrical manner with respect to the shield axis of symmetry (S) and which protrudes into the shield aperture (43, 143, 243).

8. Microscope according to claim 7, **characterized in that** the reflection shield can be rotated by up to ± 3 degrees about the optical axis of the illumination beam path (5) within a plane running perpendicular to the optical axis of the illumination beam path (5).

9. Microscope according to any of claims 1 to 8, **characterized in that** the reflection shield (17, 117, 217) amounts to at most 20% of the area of the illumination ray pencil.

## Revendications

1. Microscope avec une optique de varioscope comprenant un élément positif (9) qui, consistant en une lentille ou un ensemble de lentilles, présente une puissance de réfraction positive, et un élément négatif (11) qui, consistant en une lentille ou un ensemble de lentilles, présente une puissance de réfraction négative, sachant que
- l'élément positif (9) et l'élément négatif (11) sont agencés le long d'un axe optique (OA) de telle manière que l'élément négatif (11), vu dans une direction d'observation (B), se trouve en aval de l'élément positif (9),
- au moins l'élément positif (9) ou l'élément négatif (11) est agencé, mobile le long de l'axe optique,
- l'élément positif (9) est doté d'une première surface de lentille finale (23) qui termine l'élément positif (9) à l'opposé de la direction d'observation (B) et d'une deuxième surface de lentille finale (25) qui termine l'élément positif (9) dans la direction d'observation (B), et que l'élément positif (9) comprend une première lentille convexe (31, 131) et une deuxième lentille convexe (33, 133), sachant que la deuxième lentille convexe (33, 133) est dotée d'une surface de lentille qui la termine à l'opposé de la direction d'observation (B), que la première lentille convexe (31, 131) et la deuxième lentille convexe (33, 133) sont disposées le long de l'axe optique (OA) de telle manière que la deuxième lentille convexe (33, 133), vue dans la direction d'observation (B), se trouve en aval, et la deuxième surface finale (25) de l'élément positif (9) est formée dans la deuxième lentille convexe (33, 133) et la première surface de lentille finale (23) de l'élément positif (9) est formée dans la première lentille convexe (31, 131),
- l'élément négatif (11) est doté d'une première surface de lentille finale (27) qui termine l'élément négatif (11) à l'opposé de la direction d'observation (B) et d'une deuxième surface de lentille finale (29) qui termine l'élément négatif (11) dans la direction d'observation, et que l'élément négatif (11) est une lentille qui est composée d'une première lentille partielle (39) et d'une deuxième lentille partielle (41), sachant que la première lentille partielle (39) et la deuxième lentille partielle (41) sont disposées le long de l'axe optique (OA) de telle manière que la deuxième lentille partielle (41) se trouve en aval de la première lentille partielle (39) vue dans la direction d'observation (B), que la première surface de lentille finale (27) de l'élément négatif (11) est formée dans la première lentille partielle (39) et la deuxième surface de lentille finale (29) de l'élément négatif (11) est formée dans la deuxième lentille partielle (41), sachant que
- la deuxième surface de lentille finale (25) de l'élément positif (9) et la première surface de lentille finale (27) de l'élément négatif (11), vues dans la direction d'observation (B), sont de forme concave et que la deuxième surface de lentille finale (29) de l'élément négatif (11), vue dans la direction d'observation (B), est de forme convexe,
- et sachant que sont prévues une source de lumière (19) et une trajectoire de rayons lumineux (5) conduisant à un objet à observer (2),
**caractérisé en ce que**
- la voie de rayons lumineux (5) conduit à l'objet à observer (2) en traversant l'élément positif (9) ainsi que l'élément négatif (11) de l'optique de varioscope,
- la deuxième surface de lentille finale (25) de l'élément positif (9) et la première surface de lentille finale (27) de l'élément négatif (11) sont dotées chacune d'un rayon de courbure de 500 mm au maximum,
- la deuxième surface de lentille finale (29) de l'élément négatif (11) est dotée d'un rayon de courbure de 70 mm au maximum,
- la première surface de lentille finale (23) de l'élément positif (9), vue dans la direction d'observation (B), est dotée d'un rayon de courbure de 130 mm au maximum,
- la première lentille convexe (31, 131) de l'élément positif (9) est dotée d'une surface de lentille qui, la terminant dans la direction d'observation (B), présente une courbure convexe dont le rayon de courbure est de 450 mm au maximum, en étant vue dans la direction d'observation (B),
- la deuxième lentille convexe (33, 133) de l'élément positif (9) est dotée d'une surface de lentille qui la termine à l'opposé de la direction d'observation (B) et qui, vue dans la direction d'observation (B), présente une courbure convexe dont le rayon de courbure est de 120 mm au maximum, et
- les lentilles partielles (39, 41) de l'élément négatif (11) consistent en matériaux différents, sachant que la première lentille partielle (39) consiste en matériau dont l'indice de réfraction est de 1,6 au maximum.

2. Microscope selon la revendication 1,
**caractérisé en ce que** la première ou la deuxième lentille convexe est composée d'une première lentille convexe partielle (35, 135) et d'une deuxième lentille convexe partielle (37, 137), sachant que la première lentille convexe partielle (35, 135) et la deuxième lentille convexe partielle (37, 137) sont disposées le long de l'axe optique (OA) de telle manière que la deuxième lentille convexe partielle (37, 137) se trouve en aval de la première lentille convexe partielle (35, 135), vue dans la direction d'observation (B), les lentilles convexes partielles consistant en matériaux différents.

3. Microscope selon la revendication 1 ou la revendication 2,
**caractérisé en ce qu'**un écran de réflexion (17, 117, 217) est disposé dans la voie des rayons lumineux (5).

4. Microscope selon la revendication 3,
**caractérisé en ce que** l'écran de réflexion (17, 117, 217) est disposé entre une source de lumière (19) et une première lentille (13) située en aval de la source de lumière (19).

5. Microscope selon la revendication 4,
**caractérisé en ce que** l'écran de réflexion (17, 117, 217) est disposé de sorte à ne pas être éloigné de plus de 5 mm de la source de lumière.

6. Microscope selon l'une des revendications 1 à 5,
**caractérisé en ce que** l'écran de réflexion (17, 117, 217) est disposé directement devant ou derrière un élément de déflection (21) prévu pour la déviation de la trajectoire de rayons lumineux (5).

7. Microscope selon l'une des revendications 1 à 6,
**caractérisé en ce que** celui-ci est conçu en tant que microscope stéréo avec deux pupilles d'observateur disposées en symétrie spéculaire par rapport à un axe de symétrie, et que l'écran de réflexion (17, 117, 217) est doté d'une ouverture (43, 143, 243), d'un axe de symétrie (S) ainsi que d'au moins un épaulement qui, disposé en symétrie spéculaire par rapport à l'axe de symétrie (S), fait saillie dans l'ouverture (43, 143, 243).

8. Microscope selon la revendication 7,
**caractérisé en ce que** l'écran de réflexion (17, 117, 127) peut être tourné de jusqu'à ± 3 degrés autour de l'axe optique, sur un plan qui s'étend perpendiculairement à l'axe optique de la trajectoire de rayons lumineux (5).

9. Microscope selon l'une des revendications 1 à 8,
**caractérisé en ce que** l'écran de réflexion (17, 117, 127) représente au maximum 20 % de la surface du faisceau de rayons lumineux.
